(19) Europäisches Patentamt
European Patent Office
Office européen des brevets

(11) **EP 3 195 250 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(21) Anmeldenummer: **15770479.2**

(22) Anmeldetag: **15.09.2015**

(51) Int Cl.:
*G06T 5/00* (2006.01)     *G06T 5/50* (2006.01)

(86) Internationale Anmeldenummer:
**PCT/EP2015/071064**

(87) Internationale Veröffentlichungsnummer:
**WO 2016/041944 (24.03.2016 Gazette 2016/12)**

(54) **VERFAHREN ZUM ERZEUGEN EINES ERGEBNISBILDS UND OPTISCHE VORRICHTUNG**

METHOD FOR GENERATING A RESULT IMAGE AND OPTICAL DEVICE

PROCÉDÉ DE PRODUCTION D'UNE IMAGE RÉSULTANTE ET DISPOSITIF OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2014 DE 102014113258**

(43) Veröffentlichungstag der Anmeldung:
**26.07.2017 Patentblatt 2017/30**

(73) Patentinhaber: **Carl Zeiss Microscopy GmbH**
**07745 Jena (DE)**

(72) Erfinder:
• **STOPPE, Lars**
**07743 Jena (DE)**
• **HUSEMANN, Christoph**
**07747 Jena (DE)**
• **SINGER, Wolfgang**
**73431 Aalen (DE)**

(74) Vertreter: **Neusser, Sebastian**
**Kraus & Weisert**
**Patentanwälte PartGmbB**
**Thomas-Wimmer-Ring 15**
**80539 München (DE)**

(56) Entgegenhaltungen:
WO-A2-03/087326      US-A1- 2004 184 667
US-A1- 2008 297 624      US-A1- 2012 314 103
US-A1- 2014 002 722      US-A1- 2014 126 835

**Beschreibung**

GEBIET DER ERFINDUNG

Ausführungsbeispiele der Erfindung betreffen ein Verfahren zum Erzeugen eines Ergebnisbilds und eine entsprechende Vorrichtung. Ausführungsbeispiele betreffen insbesondere Techniken, die es ermöglichen, ein Ergebnisbild eines Objekts bereit zu stellen, das ein vorgegebenes Optimierungskriterium erfüllt.

HINTERGRUND

Bei der Abbildung von Objekten mittels einer optischen Vorrichtung kann es häufig erstrebenswert sein, ein Ergebnisbild bereitzustellen, das ein oder mehrere Optimierungskriterien erfüllt. Ein solches Optimierungskriterium kann insbesondere ein Bildkontrast des Ergebnisbilds sein. Es kann erstrebenswert sein, einen möglichst hohen Bildkontrast zu erzielen. Bei einem vergleichsweise hohe Bildkontrast kann es möglich sein, verschiedenste physikalische Parameter und Informationen über das Objekt zu gewinnen.

Es sind Techniken (strukturierte Beleuchtung) bekannt, die eine solche Optimierung des Ergebnisbilds mittels entsprechender Hardware einer Beleuchtungsvorrichtung der optischen Vorrichtung ermöglichen. Derartige Techniken sind beispielsweise beschrieben in H. Gross et al., "Handbook of Optical Systems", Band 2, Wiley-VCH, 2005. Dabei können z.B. Strukturfilter in einer Pupillenebene der Beleuchtungsvorrichtung eingesetzt werden. Dadurch kann es möglich sein, das Objekt, z.B. insbesondere ein Amplitudenobjekt, mit einer besonders großen Informationstiefe abzubilden.

Solche Techniken weisen aber bestimmte Einschränkungen oder Nachteile auf. Da typischerweise die Wahl des Strukturfilters vom abzubildenden Objekt abhängt, kann es erforderlich sein, den Strukturfilter mittels einer Maskenwechsel-Einheit austauschbar in der Beleuchtungsvorrichtung aufzunehmen und ggf. mehrere verschiedene Strukturfilter vorzuhalten. Dies kann für verschiedene Typen von Objekten, wie z.B. biologische Proben oder unbekannt nicht-biologische Proben, nachteilig sein, da eine vergleichsweise große Anzahl von Strukturfiltern vorgehalten werden muss. In der Praxis kann es dann vorkommen, dass der passende Strukturfilter nicht vorhanden ist. Ferner ist eine nachträgliche Änderung des Strukturfilters in einem nach abgeschlossener Bilderfassung (Nachbearbeitungsschritt) nicht oder nur eingeschränkt möglich. Durch das Vorhalten zusätzlicher Hardware-Komponenten erhöht sich typischerweise die Komplexität der optischen Vorrichtung. Durch das austauschbare Vorhalten der Strukturfilter kann auch eine Fehleranfälligkeit, z.B. durch mechanischer Fehlbetätigung, Abnutzung oder Verschmutzung usf., erhöht sein.

Weitere Ansätze sind z.B. bekannt aus US 2004/0184667 A1 und US 2014/002722 A1.

ZUSAMMENFASSUNG

Deshalb besteht ein Bedarf für verbesserte Techniken zum Erzeugen eines Ergebnisbilds, das ein vorgegebenes Optimierungskriterium erfüllt, die zumindest einige der vorgenannten Nachteile und Einschränkungen beheben. Insbesondere besteht ein Bedarf für solche Techniken, die ein genaues und flexibles Bereitstellen des Ergebnisbilds, das ein jeweiliges Optimierungskriterium erfüllt, ermöglichen.

Gemäß einem Aspekt betrifft die Erfindung ein Verfahren zum Erzeugen eines Ergebnisbilds eines Objekts mittels einer optischen Vorrichtung gemäß Patentanspruch 1.

Das Objekt kann z.B. ein Amplitudenobjekt sein. Das Amplitudenobjekt kann also zumindest teilweise eine Schwächung des transmittierten Lichts hervorrufen. Das Ergebnisbild kann also das Objekt abbilden. Z.B. kann das Ergebnisbild das Objekt vergrößert abbilden. Die optische Vorrichtung ist ein Mikroskop. Objekte können beispielsweise technische Objekte, insbesondere für die Routine-Prüfung identischer Bauteile, aber auch biologische Objekte umfassen. Die Intensitätsbilder können einer partiell kohärenten Abbildung des Objekts entsprechen, beispielsweise in Abgrenzung gegenüber der Fluoreszenz-Bildgebung. Insoweit können die Intensitätsbilder auch partiell-kohärente Bilder bezeichnet werden. Da die Intensitätsbilder zum Ergebnisbild kombiniert werden, können die Intensitätsbilder auch als Teilbilder bezeichnet werden.

Es werden mindestens zwei Beleuchtungsgeometrien verwendet. Im Allgemeinen können die mindestens zwei Beleuchtungsgeometrien durch verschiedenste geometrische Parameter der Beleuchtung des Objekts mit Licht charakterisiert sein. Insbesondere können die mindestens zwei Beleuchtungsgeometrien verschiedene Beleuchtungsrichtungen umfassen. Z.B. könnte mindestens eine der mindestens zwei Beleuchtungsgeometrien mehr als eine Beleuchtungsrichtung umfassen; dies bedeutet, dass mehrere Beleuchtungsrichtungen in Bezug auf eine Beleuchtungsgeometrie kombiniert werden. Durch das Kombinieren von Beleuchtungsrichtungen kann eine besonders schnelle Bildgebung erfolgen.

Alternativ oder zusätzlich können die mindestens zwei Beleuchtungsgeometrien verschiedene Beleuchtungsraumwinkel umfassen. Eine Beleuchtungsrichtung kann das Objekt z.B. aus einem wohldefinierten Winkel gegenüber der optischen Achse beleuchten. Hingegen kann eine Beleuchtungsgeometrie das Objekt aus einem Bereich von Winkeln gegenüber der optischen Achse beleuchtet. Die Beleuchtungsgeometrie kann beispielsweise einen Raumwinkel definieren, in dem Beleuchtungsstrahlen in einer Richtung oder wenigstens zwei Richtungen auf das Objekt einfallen können. Der Beleuchtungsraumwinkel kann auch als Kombination von Beleuchtungsrichtungen bezeichnet werden. Durch die Verwendung von Beleuchtungsraumwinkeln kann eine besonders schnelle Bildgebung implementiert werden.

Generell können verschiedene im Rahmen der Beleuchtungsgeometrien verwendete Beleuchtungsrichtungen unkorreliert oder korreliert sein. Um Speckle zu vermeiden, können Beleuchtungsrichtungen zusammengefasst werden, was beispielsweise dadurch realisiert werden kann, dass keine punktförmigen Lichtquellen wie z.B. Laser oder Mono-Mode Faserbüschel verwendet werden, sondern ausgedehnte Lichtquellen, wie beispielsweise LEDs oder eine Multimode-Faser. Dann wird eine Beleuchtung aus einem Raumwinkel erreicht.

In den verschiedenen offenbarten Szenarien können auch andere Beleuchtungsgeometrien eingesetzt werden: Mit korrelierten Beleuchtungsvorrichtungen kann das Objekt räumlich moduliert beleuchtet werden, d.h. das Objekt kann beispielsweise mit einem Interferenzmuster aus zwei Beleuchtungsrichtungen beleuchtet werden. Dazu können Techniken der Moire-Bildgebung eingesetzt werden, d.h. die Beleuchtungsgeometrie kann eine Moire-Beleuchtung umfassen. Gemäß der hierin offenbarten Szenarien kann eine räumlich modulierte Beleuchtungsgeometrie dazu verwendet werden, um aus einer Vielzahl von Beleuchtungsrichtungen diejenigen auszuwählen, die das Optimierungskriterium bestmöglich erfüllt.

Alternativ oder zusätzlich zu unterschiedlichen Beleuchtungsrichtungen ist es auch möglich, im Rahmen der mindestens zwei Beleuchtungsgeometrien andere Eigenschaften des Beleuchtungslichts zu variieren, wie beispielsweise die Wellenlänge bzw. die Wellenlängenverteilung oder die Polarisation des Lichtes. In einem Beispiel können die mindestens zwei Beleuchtungsgeometrien drei Beleuchtungsrichtung umfassen, wobei jede der Beleuchtungsrichtungen jeweils durch eine von drei Licht-emittierenden Dioden (engl. lightemitting diodes, LEDs) implementiert wird, die in drei Farben rot, grün und blau leuchten. Beispielsweise kann hierfür eine organische LED (OLED)-Anzeigevorrichtung verwendet werden. Alternativ oder zusätzlich kann eine Polarisationsoptik, wie beispielsweise ein Flüssigkristall-Raumlichtmodulator (engl. liquid crystal spatial light modulator, LC-SLM), verwendet werden, die eingerichtet ist, um die Polarisation der Beleuchtungsrichtungen lokal zu drehen.

Zum Kombinieren können verschiedenste Techniken eingesetzt werden. Die verschiedenen Intensitätsbilder können z.B. subtrahiert oder addiert oder multipliziert oder dividiert werden.

Das Kombinieren findet gewichtet statt; unterschiedliche Intensitätsbilder werden beim Kombinieren unterschiedlich stark berücksichtigt. Hinsichtlich des Optimierungskriteriums kann so ein zu optimierender Parameterraum erweitert werden (Kombinationsparameter). Durch das Kombinieren kann das Ergebnisbild partiell kohärent sein.

Die Kombinationsparameter können die spezifische Implementierung des Kombinierens festlegen. Z.B. können die Kombinationsparameter eine arithmetische Operation, mit der die Intensitätsbilder kombiniert werden, festlegen. Weiter bestimmen die Kombinationsparameter eine Wichtung der verschiedenen Intensitätsbilder bei dem Kombinieren.

Z.B. können bestimmte Intensitätsbilder stärker oder schwächer beim Kombinieren berücksichtigt werden, als andere Intensitätsbilder. Dadurch kann erreicht werden, dass das Ergebnisbild das Optimierungskriterium besonders gut erfüllt. Z.B. kann die Wichtung der verschiedenen Intensitätsbilder dabei verschiedene Randbedingungen erfüllen, z.B. dass Gewichte, mit denen die verschiedenen Intensitätsbilder beim Kombinieren berücksichtig werden, jeweils einen Wert von größer Null und kleiner Eins annehmen und dass eine Summe der Gewichte der verschiedenen Intensitätsbilder gleich Eins ist. Andere Randbedingungen sind möglich. Z.B. können die Kombinationsparameter in Form von Kontrollanweisungen in einem Speicher hinterlegt werden, sodass für verschiedene Routineaufgaben ohne großen Rechenaufwand auf die Kombinationsparameter zurückgegriffen werden kann. Die Kombinationsparameter können Objekt-spezifisch sein.

Durch das Beleuchten des Objekts mit den verschiedenen Beleuchtungsgeometrien und das Kombinieren der entsprechenden Intensitätsbilder kann ein Effekt erreicht werden, welcher der herkömmlichen strukturierten Beleuchtung entspricht. Dabei ist es aber möglich, dass durch geeignete Wahl z.B. der Kombinationsparametern verschiedenste Strukturfilter vergleichsweise einfach emuliert werden. Dies kann auch in einem Nachbearbeitungsschritt stattfinden. Im Rahmen einer Optimierung wird ein besonders geeigneter Satz von Kombinationsparametern aufgefunden, der das Optimierungskriterium besonders gut erfüllt. Insbesondere ist es möglich, auf die entsprechende Hardware des Strukturfilters zu verzichten - die entsprechenden Techniken können computerimplementiert umgesetzt werden. Dies kann es ermöglichen, vergleichsweise einfach, gute Ergebnisse für verschiedenste abgebildete Objekte zu erzielen.

Z.B. kann das Kombinieren ortsaufgelöst für verschiedene Bereiche der Intensitätsbilder erfolgen, sodass die verschiedenen Bereiche des Ergebnisbilds das Optimierungskriterium erfüllen. Z.B. können die verschiedenen Bereiche unterschiedliche Teile des Objekts abbilden. Ein Objekt kann auch aus mehreren Unterobjekten bestehen, z.B. einzelnen Zellen; dann können die verschiedenen Bereiche verschiedene Unterobjekte abbilden.

Z.B. kann das ortsaufgelöste Kombinieren der Intensitätsbilder in einem ersten Bereich der Intensitätsbilder auf ersten Kombinationsparametern basieren und in einem zweiten Bereich der Intensitätsbilder auf zweiten Kombinationsparametern basieren. Die ersten Kombinationsparameter können verschieden von den zweiten Kombinationsparametern sein. Dadurch kann es möglich sein, dass auch bei vergleichsweise komplexen Objekten, die z.B. in unterschiedlichen Bereichen unterschiedliche optische Eigenschaften aufweisen, lokal das Optimierungskriterium vergleichsweise gut erfüllt wird. Dann kann eine Qualität des Ergebnisbilds besonders hoch sein. Insbesondere kann es möglich sein, z.B. feine Strukturen des Objekts in den verschiedenen Bereichen sichtbar zu machen - auch wenn das Objekt in den verschiedenen Bereichen unterschiedliche optische Eigenschaften aufweist bzw. z.B. unterschiedliche Kombinationsparameter erfordert. Dies weist insbesondere im Vergleich zur klassischen strukturierenden Beleuchtung den Vorteil auf, dass es entbehrlich sein kann, einen ortsabhängigen Strukturfilter zu verwenden, dessen Struktur für verschiedene Positionen variiert. Trotzdem kann für die verschiedenen Bereiche der Intensitätsbilder die effektive Beleuchtungsgeometrie, die sich insbesondere aus dem Kombinieren der verschiedenen Intensitätsbilder ergibt, ortsaufgelöst angepasst werden.

Es ist z.B. möglich, dass die Beleuchtungsvorrichtung eine Lichtquelle mit mehreren durchschaltbaren Wellenlängen umfasst. Dies kann z.B. über verschiedenfarbige lichtemittierende Dioden (LEDs) implementiert sein oder z.B. über eine Laserwechseleinheit implementiert sein. Entsprechend wäre es möglich, dass die Beleuchtungsvorrichtung eine polychromatische Lichtquelle umfasst; gleichzeitig kann der Detektor eingerichtet sein, um die Intensitätsbilder Wellenlängen-separiert zu erfassen. Eine solche Technik kann z.B. mit einem sogenannten Rot-Grün-Blau Charge-coupled Device (RGB-CCD) implementiert werden. In solchen Fällen kann es möglich sein, dass die verschiedenen voranstehend beschriebenen Techniken Wellenlängen-abhängig angewendet werden und dadurch ein verbessertes polychromatisches Ergebnisbild erzeugt wird. Auch durch die Wahl der Wellenlänge kann der zu optimierender Parameterraum betreffend das Optimierungskriterium vergrößert werden.

Z.B. kann das sequentielle Beleuchten mit den mindestens zwei Beleuchtungsgeometrien mehrfach für verschiedene Wellenlängen durchgeführt werden und jeweils ein entsprechendes Intensitätsbild erfasst werden. Alternativ oder zusätzlich wäre es auch möglich, dass das sequentielle Beleuchten mit einer polychromatischen Lichtquelle der Beleuchtungsvorrichtung durchgeführt wird und das Erfassen der entsprechenden Intensitätsbilder mehrfach für verschiedene Wellenlängen durchgeführt wird. Das Kombinieren der entsprechenden Intensitätsbilder kann jeweils zum Erzeugen eines zugehörigen Ergebnisbilds für die verschiedenen Wellenlängen durchgeführt werden.

Derart kann es also möglich sein, einen Satz von Ergebnisbildern zu erhalten, wobei jedes Ergebnisbild einer entsprechenden Wellenlänge entspricht. Es wäre z.B. möglich, die verschiedenen Ergebnisbilder zu einem polychromatischen Ergebnisbild zu kombinieren.

Mittels solcher voranstehend beschriebener Wellenlängen-abhängiger Techniken kann ein besonders qualitativ hochwertiges Ergebnisbild erzeugt werden. Insbesondere kann es möglich sein, dass das Ergebnisbild das vorgegebene Optimierungskriterium besonders gut erfüllt.

Das Beleuchten des Objekts und das Erfassen des Intensitätsbilds definieren einen Bilderfassungsschritt. Im Allgemeinen kann es möglich sein, dass das Kombinieren in Echtzeit während dem Bilderfassungsschritt durchgeführt wird. Das Verfahren kann z.B. weiterhin umfassen: Darstellen des Ergebnisbilds auf einem Bildschirm. Das Darstellen kann während des Bilderfassungsschritts erfolgen. Dadurch kann es möglich sein, besonders zügig ein qualitativ hochwertiges Ergebnisbild zu erhalten. Insbesondere kann derart eine Steuerung der Bilderfassung basierend auf dem Ergebnisbild möglich werden.

Insbesondere in den voranstehend beschriebenen Fällen, bei denen das Kombinieren in Echtzeit stattfindet, kann es erstrebenswert sein, die Kombinationsparameter des Kombinierens zumindest teilweise vorzugeben - z.B. anstatt eine vollständige Bestimmung der Kombinationsparameter während des Bilderfassungsschritts durchzuführen.

Das Verfahren kann z.B. weiterhin das Durchführen einer Optimierung mittels der Recheneinheit umfassen. Das Durchführen der Optimierung kann die Kombinationsparameter für das Kombinieren bereitstellen, mit denen das Ergebnisbild das vorgegebene Optimierungskriterium erfüllt.

Dabei können die Kombinationsparameter ortsaufgelöst bereitgestellt werden. Z.B. kann das Durchführen der Optimierung ortsaufgelöst für verschiedene Bereiche der Intensitätsbilder erfolgen. Die Kombinationsparameter können jeweils für die verschiedenen Bereiche bereitgestellt werden. Es ist weiterhin möglich, dass das Kombinieren ortsaufgelöst für die verschiedenen Bereiche der Intensitätsbilder basierend auf den entsprechenden Kombinationsparametern erfolgt.

Das Durchführen der Optimierung kann auch Wellenlängen-aufgelöst für verschiedene Wellenlängen der Beleuchtung und / oder Detektion durchgeführt werden.

In nicht zur Erfindung gehörenden Varianten würde das das Durchführen der Optimierung in einem Kalibrationsschritt vor dem Bilderfassungsschritt durchgeführt. Dann können die Kombinationsparameter vorbestimmt sein und während des Bilderfassungsschritts kann das Kombinieren in Echtzeit erfolgen. Insbesondere in einem solchen Szenario kann es möglich sein, dass das Kombinieren ortsaufgelöst für verschiedene Bereiche der Intensitätsbilder erfolgt. Z.B. kann es möglich sein, dass im Rahmen des Kalibrationsschritts die Kombinationsparameter bzw. weitere zu optimierende Parameter ortsaufgelöst vorbestimmt werden. Dann kann es möglich sein, z.B. mittels Techniken der Objektverfolgung bzw. Landmarkenerkennung, einen zeitlichen Verlauf einer Position der verschiedenen Bereiche zu überwachen. Derart kann sichergestellt werden, dass für die verschiedenen Bereiche jeweils die passenden Kombinationsparameter bzw.

weitere zu optimierende Parameter verwendet werden.

Es wäre aber auch möglich, dass das Durchführen der Optimierung in dem Nachbearbeitungsschritt nach dem Bilderfassungsschritt durchgeführt wird. Z.B. kann das Verfahren weiterhin das Abspeichern von Bilddaten umfassen. Die Bilddaten können auf den erfassten Intensitätsbildern basieren. Das Verfahren kann weiterhin das Abspeichern von zugehörigen Steuerdaten umfassen, die die jeweilige Beleuchtungsgeometrie indizieren. Das Abspeichern kann in einem nicht-flüchtigen Speicher erfolgen. Das Kombinieren kann in einem Nachbearbeitungsschritt nach dem Bilderfassungsschritt stattfinden. Das Kombinieren kann anhand der abgespeicherten Bilddaten und Steuerdaten erfolgen. Derart kann es insbesondere möglich sein, die Kombinationsparameter bzw. weitere zu optimierende Parameter, auf denen das Kombinieren basiert, durch das Durchführen der Optimierung zeitunkritisch zu bestimmen. Derart kann es möglich sein, die Kombinationsparameter bzw. weitere zu optimierende Parameter vergleichsweise genau zu bestimmen. Dadurch kann eine besonders hohe Qualität des Ergebnisbilds erreicht werden, d.h. das Ergebnisbild kann das Optimierungskriterium besonders gut erfüllen.

Das Durchführen der Optimierung kann z.B. mit verschiedenen, im Grundsatz vorbekannten Techniken erfolgen. Es werden numerische Techniken eingesetzt. Es können evolutionäre Optimierungsalgorithmen verwendet werden. Es können ableitungsbasierte Optimierungsverfahren verwendet werden. Beispielhaft für derartige Techniken sind der Levenberg-Marquardt-Algorithmus, Gauß-Verfahren oder Verfahren des steilsten Abstiegs, die auch als so genannte "steepest descent"-Algorithmen bezeichnet werden. Es können auch andere alternative Optimierungsverfahren wie Simplex-Optimierung verwendet werden.

In nicht zur Erfindung gehörenden Varianten würden die Kombinationsparameter bzw. weitere zu optimierende Parameter anhand verschiedener Eigenschaften z.B. des Objekts und / oder der verwendeten mindestens zwei Beleuchtungsgeometrien aus einer vorgegebenen Datenbank, die mögliche Kombinationsparameter bzw. weitere zu optimierende Parameter beinhaltet, ausgewählt werden. Z.B. kann die Datenbank solche Kombinationsparameter beinhalten, für die bekannt ist, dass bei bestimmten Objekten und / oder bestimmten Beleuchtungsgeometrien das Ergebnisbild das vorgegebene Optimierungskriterium besonders gut erfüllt. Derart könnte eine besonders einfache und schnelle Implementierung des Kombinierens möglich sein.

Voranstehend wurden verschiedenste Techniken in Bezug auf das Optimieren erläutert. Dabei können diese Techniken in Bezug auf unterschiedliche spezifische Optimierungskriterien eingesetzt werden. Z.B. kann das Optimierungskriterium aus folgender Gruppe ausgewählt sein: ein Bildkontrast; eine Kantensteilheit; eine Bildschärfe; eine Güte einer Modulationsübertragungsfunktion (MTF); ein Ortsfrequenz-abhängiges Optimierungskriterium. Es ist möglich, dass das Optimierungskriterium hinsichtlich einer oder mehrerer der vorgenannten Größen festgelegt ist. Dabei kann das Optimierungskriterium bestimmte Toleranzbereiche bzw. Schwellenwerte umfassen. Durch die flexible Wahl des Optimierungskriteriums kann derart ein Ergebnisbild erzeugt werden, das besonders hohe Qualität aufweist bzw. besonders gut auf die Art des untersuchten Objekts abgestimmt ist.

Die vorgenannten Techniken können z.B. mit Hardware-basierten Filtertechniken kombiniert werden. Z.B. kann das Beleuchten das Anwenden eines Strukturfilters der Beleuchtungsvorrichtung umfassen. Z.B. kann das Beleuchten das Anwenden eines Raumfilters der Beleuchtungsvorrichtung umfassen. Entsprechende Filter können also beim Beleuchten in einem Strahlengang des Lichts, z.B. zwischen einer Lichtquelle und dem Objekt, platziert werden.

Durch das Verbinden des Kombinierens der Intensitätsbilder mit solchen Hardware-basierten Techniken kann eine besonders effiziente Implementierung der Techniken zum Erzeugen des Ergebnisbilds erreicht werden. Insbesondere kann es z.B. möglich sein, Rechenkapazitäten die zum Durchführen der Techniken benötigt werden, zu reduzieren. Insbesondere können die Intensitätsbilder Hardware-implementiert bereits so vorkonditioniert werden, dass das Optimierungskriterium vergleichsweise einfach zu erfüllen ist.

Solche Effekte können alternativ oder zusätzlich auch durch eine entsprechenden Nachbearbeitung der Intensitätsbilder mittels der Recheneinheit erreicht werden. Die Nachbearbeitung kann wiederum während des Bilderfassungsschritts oder des Nachbearbeitungsschritts durchgeführt werden. Z.B. kann das Verfahren weiterhin - vor dem Kombinieren der Intensitätsbilder - umfassen: Mittels der Recheneinheit Anwenden eines Operators auf die erfassten Intensitätsbilder zum Anpassen der Intensitätsbilder. Im Allgemeinen kann der Operator auf verschiedenste Arten und Weisen gewählt werden. Z.B. kann der Operator aus folgender Gruppe ausgewählt sein: Wichtung; Verstärkung; Dämpfung; Betrag; Quadrat; Wurzel; Vorzeichenumkehr; Glättung von Bildpunktwerten; Aberrationskorrektur von Bildpunkten; Normierung auf einen Mittelwert von Bildpunktwerten des jeweiligen Intensitätsbilds; Anwendung eines Raumfilters.

In anderen Worten können also vor dem Kombinieren der einzelnen Intensitätsbilder diese mit speziellen Filtern verrechnet werden. Eine spezielle Ausführungsform beinhaltet das Anwenden des oben genannten Raumfilters, z.B. computerimplementiert und/oder durch eine Hardware-Implementierung. Hierbei kann der Raumfilter für jede Beleuchtungsrichtung der Beleuchtungsgeometrien Strukturen des Objekts, die in einer durch die Beleuchtungsrichtung und einer optischen Achse der optischen Vorrichtung festgelegten Ebene angeordnet sind, gegenüber Strukturen, die senkrecht zu dieser Ebene angeordnet sind, dämpfen. Dadurch kann der Effekt eines besonders erhöhten Bildkontrastes erreicht werden. Typischerweise kontrastieren nämlich Beleuchtungsrichtungen Strukturen senkrecht zu der vorgenannten Ebene stärker, als Strukturen innerhalb der vorgenannten Ebene. Dieser Effekt kann durch eine selektive Dämpfung anhand des Raumfilters wie voranstehend beschrieben verstärkt werden.

Gemäß einem weiteren Aspekt betrifft die vorliegende Erfindung eine optische Vorrichtung gemäß Anspruch 13.

Z.B. kann die optische Vorrichtung gemäß dem gegenwärtig diskutierten Aspekt eingerichtet sein, um das Verfahren zum Erzeugen eines Ergebnisbilds gemäß einem weiteren Aspekt der vorliegenden Erfindung durchzuführen.

Für eine solche optische Vorrichtung gemäß des gegenwärtig diskutierten Aspekts können Effekte erzielt werden, die vergleichbar sind mit den Effekten, die für das Verfahren zum Erzeugen eines Ergebnisbilds gemäß einem weiteren Aspekt der vorliegenden Erfindung erzielt werden können.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

KURZE BESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

FIG. 1 illustriert schematisch das Beleuchten eines Objekts mit verschiedenen Beleuchtungsgeometrien.

FIG. 2 illustriert schematisch das Beleuchten des Objekts mit den verschiedenen Beleuchtungsgeometrien in größerem Detail als FIG. 1.

FIG. 3 illustriert schematisch eine Beleuchtungsvorrichtung, die ein LED-Array umfasst, und die eingerichtet ist, um das Objekt mit den verschiedenen Beleuchtungsgeometrien zu beleuchten.

FIG. 4A illustriert schematisch das Anwenden eines Operators auf verschiedene Intensitätsbilder, die das Objekt abbilden, und das Kombinieren der derart bearbeiteten Intensitätsbilder zum Erzeugen eines Ergebnisbilds.

FIG. 4B illustriert schematisch das Wellenlängen-aufgelöste Kombinieren verschiedener Intensitätsbilder, die das Objekt abbilden, zum Erzeugen eines Ergebnisbilds.

FIG. 5 illustriert schematisch das Kombinieren verschiedener Intensitätsbilder, die das Objekt abbilden, zum Erzeugen eines Ergebnisbilds, wobei das Kombinieren ortsaufgelöst stattfindet.

FIG. 6 illustriert schematisch eine optische Vorrichtung, die zum Durchführen von Techniken gemäß verschiedener Ausführungsformen eingerichtet ist.

FIG. 7 ist ein Flussdiagramm eines Verfahrens gemäß verschiedener Ausführungsformen.

DETAILLIERTE BESCHREIBUNG VON AUSFÜHRUNGSBEISPIELEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Darstellungen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und ihr Zweck dem Fachmann verständlich werden.

In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein.

Nachfolgend werden Techniken illustriert, bei denen ein Objekt mit verschiedenen Beleuchtungsgeometrien beleuchtet wird. Dabei können die Beleuchtungsgeometrien insbesondere unterschiedliche Beleuchtungsrichtungen und / oder unterschiedliche Beleuchtungsraumwinkel betreffen. Für die verschiedenen Beleuchtungsgeometrien wird jeweils ein Intensitätsbild erfasst. Die verschiedenen Intensitätsbilder werden zu einem Ergebnisbild kombiniert, z.B. durch Addition. Bei dem Kombinieren können insbesondere solche Intensitätsbilder selektiv oder vergleichsweise prominent berücksichtigt werden, die zu einer Kontrast- oder Auflösungssteigerung oder im Allgemeinen dem besseren Erfüllen eines Optimierungskriteriums beitragen; eine solche Wichtung des Einflusses der verschiedenen Intensitätsbilder auf das Ergebnisbild wird durch das Verwenden von Gewichten beim Kombinieren erreicht werden. Das Kombinieren kann ortsaufgelöst erfolgen. Alternativ oder zusätzlich zu solchen Kombinationsparametern können noch andere zu optimierende Parameter hinsichtlich des Optimierungskriteriums berücksichtigt werden, wie z.B. eine Wellenlänge bei der das jeweilige Intensitätsbild das Objekt abbildet oder das Anwenden eines Operators auf das jeweilige Intensitätsbild vor dem Kombinieren.

Solche Techniken können auch als partiell kohärente mikroskopische Abbildung bezeichnet werden. Unter der partiell kohärenten mikroskopischen Abbildung versteht man eine Abbildung unter Beleuchtung mit einer unkorrelierten, d.h. räumlich inkohärenten effektiven Lichtquelle, deren Ausdehnung oder Form von der Eintrittspupille des optischen Abbildungssystems abweicht. In den verschiedenen offenbarten Szenarien kann die Beleuchtungsvorrichtung entsprechend ausgebildet sein.

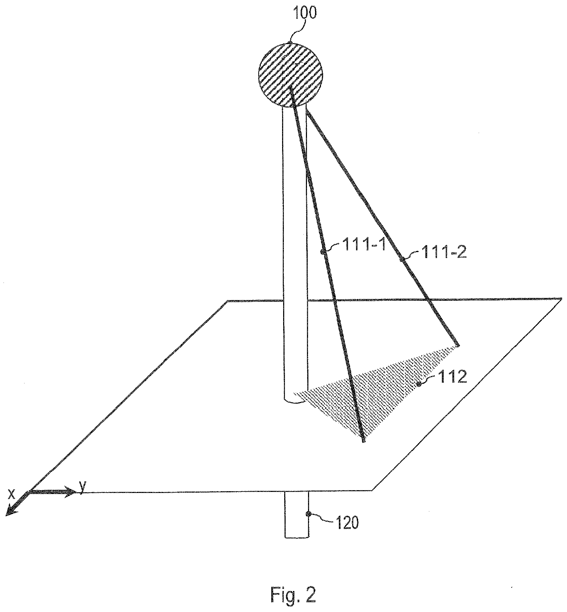

Typischerweise kann über die Form und Größe der effektiven Lichtquelle die Kontrastübertragungsfunktion beeinflusst werden. Grundsätzlich ist eine Kontrastübertragung von 1 bis zur Auflösungsgrenze für jede Objektfrequenz erreichbar, siehe beispielsweise Figuren 2 - 5 in H. Siedentopf, "Die Sichtbarmachung von Kanten im mikroskopischen Bilde" in Zeitschr. f. wiss. Mikroskopie Bd. XXV (1908).

Formal kann die partiell inkohärente Abbildung gemäß Referenzimplementierungen als inkohärente Summe vieler kohärenter Einzel- oder Teilbilder beschrieben werden, wobei gemäß der Referenzimplementierungen das resultierende Summenbild nach üblichen Methoden digital aufbereitet werden kann; Dies kann knapp ausgedrückt werden als: Summe über kohärente Einzelbilder bzw. Intensitätsbilder ergibt ein partiell kohärentes Bild, welches wiederum digital nachbearbeitet werden kann.

Gemäß der hierin beschriebenen Techniken kann die digitale Nachbearbeitung bereits in Bezug auf die Einzelbilder bzw. Intensitätsbilder erfolgen, z.B. in Bezug auf quasi-kohärenten Einzelbilder. Dann können die digital nachbearbeiteten bzw. angepassten Intensitätsbilder kombiniert werden.

Solche Techniken ermöglichen es, eine hohe Informationstiefe des Ergebnisbilds zu erzeugen; in anderen Worten kann das Ergebnisbild das Objekt besonders gut bzw. detailreich abbilden. Der Informationsgehalt des Ergebnisbilds ist vergleichsweise hoch. Solche Techniken können insbesondere Ergebnisse erzielen, die vergleichbar sind mit Ergebnissen, die mittels einer herkömmlichen strukturierten Beleuchtung erzielt werden können. Dabei kann es jedoch entbehrlich sein, entsprechende Hardware vorzusehen; insbesondere kann es entbehrlich sein, entsprechende Strukturfilter vorzusehen. Die vorliegenden Techniken können insbesondere in einem Nachbearbeitungsschritt nach einem Bilderfassungsschritt durchgeführt werden.

Entsprechende Techniken können vergleichsweise schnell durchgeführt werden. Z.B. kann es möglich sein, das Kombinieren durch eine entsprechende Hardware-Codierung eines entsprechenden Prozesses zu implementieren. Damit können die vorliegenden Techniken insbesondere in Echtzeit durchgeführt werden. Dies kann eine Anwendung für zeitaufgelöste Bildgebung ermöglichen. Dazu gehören z.B. die Zell-Morphologieanalyse, die Wachstumsanalyse, die Infektionsanalyse und die automatisierte Vermessung von Objekten. Es wäre auch möglich, das Kombinieren durch Software zu implementieren.

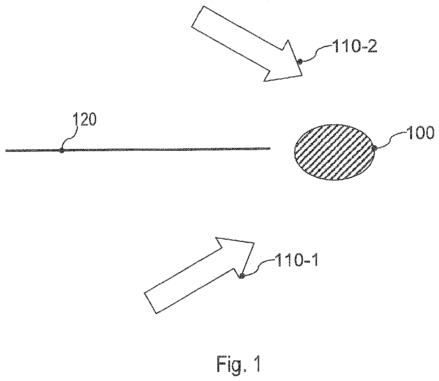

In FIG. 1 ist das Beleuchten eines Objekts 100 mit verschiedenen Beleuchtungsgeometrien 110-1, 110-2 illustriert. Gemäß den hierin beschriebenen Techniken wird das Objekt 100 mit den zwei Beleuchtungsgeometrien 110-1, 110-2 mittels einer entsprechenden Beleuchtungsvorrichtung (in Figur 1 nicht gezeigt) sequentiell beleuchtet. Dann kann mittels eines Detektors (in FIG. 1 nicht gezeigt) für jede der zwei Beleuchtungsgeometrien 110-1, 110-2 während des Beleuchtens ein Intensitätsbild des Objekts 100 erfasst werden. Diese Intensitätsbilder können dann zum Erzeugen des Ergebnisbilds kombiniert werden. Das Kombinieren erfolgt derart, dass das Ergebnisbild ein vorgegebenes Optimierungskriterium erfüllt. In FIG. 1 ist auch eine optische Achse 120 der optischen Vorrichtung dargestellt. Die optische Achse 120 kann diejenige Achse der optischen Vorrichtung bezeichnen, entlang derer ein idealisierter Lichtstrahl keine oder nur eine geringe Ablenkung erfährt.

In FIG. 2 ist ein der FIG. 1 entsprechendes Szenario dreidimensional dargestellt. In FIG. 2 sind zwei Beleuchtungsrichtungen 111-1, 111-2, mit denen das Objekt 100 gemäß der beiden Beleuchtungsgeometrien 110-1, 110-2 beleuchtet werden kann, dargestellt. Aus FIG. 2 ist ersichtlich, dass die beiden Beleuchtungsrichtungen 111-1, 111-2 einen wohldefinierten Winkel mit der optischen Achse 120 einschließen. Ein sog. Beleuchtungsvektor kann definiert werden.

In verschiedenen Szenarien kann es jedoch entbehrlich sein, wohldefinierte Beleuchtungsrichtungen 111-1, 111-2 zum Beleuchten des Objekts 100 zu verwenden. Vielmehr kann es möglich sein, dass die verschiedenen Beleuchtungsgeometrien 110-1, 110-2 Beleuchtungsraumwinkel 112 umfassen. Es ist jedoch nicht erforderlich, dass die Beleuchtungsgeometrien zusammenhängend und konvex sind. Während nachfolgend teilweise auf Beleuchtungsraumwinkel Bezug genommen wird, können bei allen beschriebenen Ausführungsbeispielen auch Beleuchtungsgeometrien verwendet werden, in denen Beleuchtungsstrahlen nicht in einem zusammenhängenden und/oder nicht in einem konvexen Winkelbereich auf das Objekt einfallen. Insbesondere kann also in den verschiedenen hierin offenbarten Szenarien eine Kombination aus mehreren Beleuchtungsrichtungen vorliegen, die nicht zusammenhängend angeordnet sind.

In FIG. 2 ist ein Beleuchtungsraumwinkel 112 beispielhaft dargestellt (in FIG. 2 schraffiert dargestellt), der durch die vorgenannten Beleuchtungsrichtungen 111-1, 111-2 begrenzt wird. In anderen Worten kann also der Beleuchtungsraumwinkel 112 eine Vielzahl von verschiedenen Beleuchtungsrichtungen 111-1, 111-2 umfassen und sich über einen gewissen Winkelbereich in Bezug auf die optische Achse 120 erstrecken.

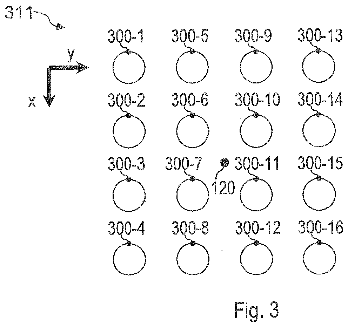

Im Allgemeinen können unterschiedlichste Beleuchtungsvorrichtung verwendet werden, um die verschiedenen Beleuchtungsgeometrien 110-1, 110-2 bereitzustellen. Es kann etwa ein Scan-Spiegel z.B. in einer Feldblendenebene der Beleuchtungsvorrichtung verwendet werden. Es könnte auch eine adaptive Komponente in einer Aperturblende bzw. Beleuchtungspupille der Beleuchtungsvorrichtung verwendet werden; z.B. könnte die Beleuchtungsvorrichtung gemäß Deutscher Patentanmeldung 10 2014 101 219.4 verwendet werden. Es wäre auch möglich, dass die Beleuchtungsvorrichtung 311 ein LED-Array umfasst (cf. FIG. 3). Z.B. können die LEDs 300-1 - 300-16 des LED-Arrays gemäß einem kartesischen Raster angeordnet sein, wobei Einheitszellen des Rasters quadratisch oder rechteckförmig ausgestaltet sein können. Auch andere Raster können implementiert werden, etwa hexagonale Raster etc. Es wäre z.B. auch möglich, dass das LED-Array einen oder mehrere Ringe von LEDs, z.B. mit verschiedenen Radien umfasst. Dann kann z.B. durch Ansteuern einer bestimmten Leuchtdiode des LED-Arrays, die einen bestimmten Abstand gegenüber der optischen Achse aufweist, eine bestimmte Beleuchtungsrichtung implementiert werden.

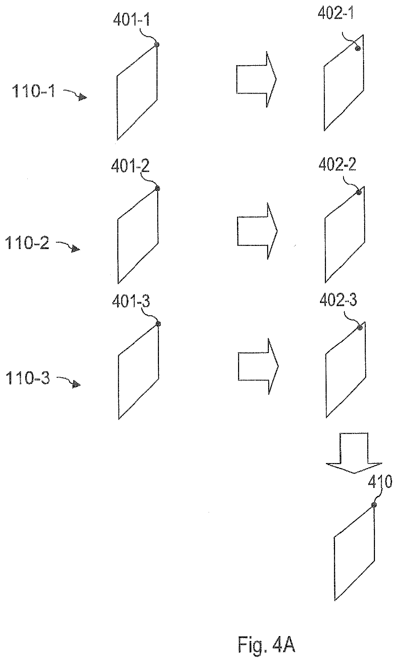

In FIG. 4A ist das Kombinieren der mit drei verschiedenen Beleuchtungsgeometrien 110-1, 110-2, 110-3 erfassten Intensitätsbilder 401-1 - 401-3 dargestellt. Gemäß der Ausführungsform der FIG. 4A werden die verschiedenen Intensitätsbilder 401-1 - 401-3, bevor sie schlussendlich zu dem Ergebnisbild 410 kombiniert werden, zunächst bearbeitet.

Dazu kann z.B. ein Operator auf die erfassten Intensitätsbilder 401-1 - 401-3 angewendet werden. Der Operator kann z.B. aus folgender Gruppe ausgewählt sein: Wichtung; Verstärkung; Dämpfung; Betrag; Quadrat; Wurzel; Vorzeichenumkehr; Glättung von Bildpunkten; Aberrationskorrektur von Bildpunkten; Normierung auf einen Mittelwert von Bildpunkten des jeweiligen Intensitätsbilds 401-1 - 401-6; und Anwendung eines Raumfilters.

Es ist also gemäß der hierin beschriebenen Techniken möglich, eine bevorzugte Beleuchtung für spezifische Objekte synthetisch nachzubilden, indem pro Lichtquellenpunkt - d.h. für die verschiedenen Beleuchtungsrichtungen - einzelne Intensitätsbilder aufgenommen werden können. Diese Intensitätsbilder können dann miteinander kombiniert bzw. verrechnet werden. Eine reine Addition der Bilder entspräche der gewöhnlichen partiell kohärenten Abbildung. Eine gewichtete Selektion von ausgewählten Bildern entspräche dem Vorgehen bei der Source-Mask-Optimization (SMO) im Rahmen der Lithographie. Es können entsprechende Operatoren eingesetzt werden, wie sie z.B. grundsätzlich aus der SMO bekannt sind. Hierbei ist aber zu beachten, dass im Rahmen der Lithographie das zu erzeugende Objekt bekannt ist, wobei vorliegend das Objekt a-priori unbekannt sein kann. Es können also Operatoren eingesetzt werden, die unterschiedliche Beleuchtungen nachbilden, wie beispielsweise annulare Beleuchtung, Dipolbeleuchtung, Rheinbergscher Farbkontrast, Dunkelfeld-Phasenkontrast, etc.

Das Anwenden des Operators auf die erfassten Intensitätsbilder und die Kombination der Intensitätsbilder kann formal ausgedrückt werden durch:

$$I(x) = \sum_q G(q)I(x,q),$$

wobei:

x:       Ortskoordinate;
q:       Pupillenkoordinate bzw. Beleuchtungsrichtung;
I(x):    Intensitätsbild;
G(q):  Operatorfunktion für die einzelnen Beleuchtungsrichtungen; und
I(x,q):  Teilbild zu einer Beleuchtungsrichtung q.

In verschiedenen Szenarien kann der Operator G beispielsweise einer globalen Gewichtung der verschiedenen Beleuchtungsrichtungen entsprechen, d.h. keine Abhängigkeit vom Ort x aufweisen.

In weiteren Szenarien können lokale Operatoren eingesetzt werden, d.h. Operatoren die eine Abhängigkeit vom Ort x aufweisen. Ein Beispiel sind proportional lokale Kontrastkriterien (Mikrokontraste). Der Operator kann also eine Ortsabhängigkeit aufweisen, G(x,q).

Somit ergibt sich:

$$I(x) = \sum_q G(x,q)I(x,q).$$

G(x,q): Orts- und Beleuchtungsrichtungsabhängige Operatorfunktion, d.h. jeder Operator zu einer Beleuchtungsrichtung kann ortsabhängig sein.

Durch das Anwenden solcher Operatoren kann es möglich sein, die verschiedenen Intensitätsbilder 401-1 - 401-3 derart zu bearbeiten, dass sie im Rahmen des Kombinierens besonders gut handhabbar sind, z.B. vergleichbare Signalamplituden aufweisen und / oder bekannte Aberrationen bereits frühzeitig entfernt werden. Dadurch kann die Qualität des Ergebnisbilds 410 erhöht werden.

Nachfolgend werden verschiedene Beispiele für Operatoren erläutert.

Beispielsweise können multiplikative Operatoren eingesetzt werden. Es können Operatoren, verwendet werden, die beispielsweise den normierten lokalen Kontrast, die normierte lokale Intensität, und / oder den normierten Intensitätsgradienten berücksichtigen. Als Norm dieser Größen kann z.B. die maximale Intensität $N_2(q) = \max(I(x,q))$ in

$$N_1(q) = \sum_x I(x,q)$$

einem Intensitätsbild oder die gesamte Intensität in einem Intensitätsbild eingesetzt werden. Es sind auch andere Normen möglich.

Als Beispiel für die oben genannten Beispiele für den Operator ist nachfolgend der normierte Gradient dargestellt:

$$LS(x,q) = \frac{\nabla I(x,q)}{N_i}$$

Bildanteile mit vergleichsweise kleinem Intensitätsgradienten oder vergleichsweise geringer Helligkeit werden durch diesen Operator typischerweise unterdrückt; daher wirkt der Operator als Filter. Große Gradienten liegen bei Kanten vor, so dass dieser Operator als Kanten verstärkender Filter wirkt.

Eine entsprechende Funktion - wie obenstehend rein beispielhaft in Bezug auf den normierten Gradienten illustriert - kann direkt als Operator verwendet werden oder kann zunächst in eine Schwellwert-funktion umgewandelt werde, damit ein Schwellenwert-Operator erhalten wird:

$$G(x,q) = \begin{cases} 1 & LS(x,q) \geq S \\ 0 & LS(x,q) < S \end{cases}$$

Ein weiteres Beispiel für einen Operator ist ein morphologischer Operator: dabei werden Inhalte des Intensitätsbilds nicht allein nach lokalen Kriterien bewertet, sondern es werden globale Kriterien und / oder Umfeldkriterien für andere Ortspunkt x' berücksichtigt. Solche Operationen sind beispielsweise Dilatation oder Erosion, was Kantenfiltern bzw. Filtern zur Rauschreduzierung (Rauschfilter) entspricht. Diese Operatoren können durch die Folgende Funktion dargestellt werden:

$$I(x) = \sum_{q,x'} G(x,x',q)I(x',q)$$

Im Allgemeinen können die Operatoren auch Informationen anderer Intensitätsbilder berücksichtigen. Ist beispielsweise durch ein bestimmtes Intensitätsbild oder einige bestimmte Intensitätsbilder ein bestimmtes Objektdetail schon ausreichend durch Filterung extrahiert, so kann es in den übrigen Intensitätsbildern unterdrückt werden. Der Operator kann somit geschrieben werden als:

$$I(x) = \sum_{q,x',q'} G(x,x',q,q')F\{I(x',q); I(x',q')\}I(x,q)$$

mit einer Funktion F{...} auf den einzelnen Intensitätsbildern, wobei GF den Operator beschreibt.

Beispielsweise ist zu erwarten, dass Kanten besonders gut durch Beleuchtungsrichtungen abgebildet werden, die senkrecht zu der Kante ausgerichtet sind. Für eine solche identifizierte Kante können dann Intensitätsbilder aus anderen Beleuchtungsrichtungen mittels des Operators lokal unterdrückt werden.

Die Gewichtsfunktion G(x,x',q,q') kann zunächst an den einzelnen Intensitätsbildern bestimmt werden und wird durch Optimierung des Gesamtbildes weiter verbessert, so dass ein Benutzer ein gewünschtes Objektdetail in Bezug auf das Optimierungskriterium besonders gut abgebildet erhält.

Es ist im Allgemeinen auch möglich, dass bestimmte Effekte, die mittels der voranstehenden Techniken des Anwendens eines Operators erreicht werden, durch Einsatz geeigneter Hardware erzeugt werden können. Z.B. kann es möglich sein, dass das Beleuchten das Anwenden eines Raumfilters der Beleuchtungsrichtung umfasst. Der Hardware-implementierte Raumfilter kann vergleichbare Effekte erzielen, die mit einem Software-basierten Raumfilter erzielt werden können. Gleichzeitig kann ein Rechenaufwand reduziert werden. Der Softwarebasierte Raumfilter kann eine erhöhte Flexibilität in der Anwendung aufweisen.

Z.B. kann der vorgenannte Hardware- und / oder Software-implementierte Raumfilter dazu verwendet werden, ein den Bildkontrast betreffendes Optimierungskriterium besonders gut zu erfüllen. So kann der Raumfilter entlang spezifischer Richtungen wirken. Z.B. kann der Raumfilter durch eine selektive Verstärkung / Dämpfung von Frequenzen einer FourierTransformation der Intensitätsbilder 401-1 - 401-3 wirken. Dabei kann eine Orientierung der entsprechenden Beiträge zum Spektrum berücksichtigt werden. Hierzu wird Bezug genommen auf FIG. 2. Der Raumfilter kann selektiv entlang solcher Richtungen wirken, die in einer Ebene liegen, die durch die optische Achse 120 und die jeweilige Beleuchtungsrichtung 111-1, 111-2 aufgespannt wird; z.B. kann der Raumfilter Strukturen des Objekts 100, die entlang (senkrecht) zu dieser Ebene orientiert sind, verstärken (dämpfen). Dies kann einen Effekt, der durch das Verwenden der zu den beiden Beleuchtungsrichtungen 111-1, 111-2 zugehörigen Intensitätsbilder 401-1 -401-3 erzielt werden kann, verstärken. So weist z.B. das Intensitätsbild 401-1 - 401-3, welches für Beleuchtung mit der ersten Beleuchtungsrichtung 111-1 erfasst wird, bereits einen besonders hohen Bildkontrast für Strukturen des Objekts 100 auf, die in der durch die optischen Achse 120 und die erste Beleuchtungsrichtung 111-1 aufgespannten Ebene liegen. Dieser Effekt kann durch den Raumfilter weiter verstärkt werden. Das Ergebnisbild 410 erfüllt dann das entsprechende in Bezug auf den Bildkontrast definierte Optimierungskriterium besonders gut.

Wieder Bezug nehmend auf FIG. 4A: Die bearbeiteten Intensitätsbilder sind in FIG. 4A rechts dargestellt und können z.B. als Ausgangsbilder 402-1 - 402-3 bezeichnet werden. Die verschiedenen Ausgangsbilder 402-1 - 402-3 werden dann zu dem Ergebnisbild 410 kombiniert. Hierbei kann das Kombinieren z.B. durch Summation, Subtraktion, Division oder Multiplikation der verschiedenen Ausgangsbilder 402-1 - 402-3 miteinander geschehen. Z.B. kann bei dem Kombinieren der verschiedenen Ausgangsbilder 402-1 - 402-3 Wichtungsfaktoren für die einzelnen Ausgangsbilder 402-1 - 402-3 berücksichtigt werden. Dadurch kann der Einfluss der verschiedenen Ausgangsbilder 402-1 - 402-3 auf das Ergebnisbild 410 gesteuert werden. Damit wird erreicht, dass das Kombinieren derart erfolgt, dass das Ergebnisbild 410 das vorgegebene Optimierungskriterium erfüllt. Solche und weitere Parameter des Kombinierens können auch als Kombinationsparameter bezeichnet werden.

Dabei werden die Kombinationsparameter durch das Durchführen einer numerischen Optimierung bestimmt. Die Optimierung wird dabei derart durchgeführt, dass solche Kombinationsparameter bestimmt werden, die das Optimierungskriterium möglichst gut erfüllen. Hierbei sind verschiedenste Optimierungskriterien möglich. Z.B. kann das Optimierungskriterium einen Bildkontrast und/oder eine Kantensteilheit und/oder eine Bildschärfe und/oder eine Güte einer Modulationsübertragungsfunktion und/oder ein Ortsfrequenz-abhängiges Optimierungskriterium betreffen.

Im Allgemeinen wird die Optimierung vorsehen, einzelne Intensitätsbilder unter unterschiedlichen Beleuchtungsrichtungen zu erfassen und aus den einzelnen Intensitätsbildern ein solches Ergebnisbild des Objektes zu erzeugen, welches eine bestimmte Abbildungsaufgabe bzw. das Optimierungskriterium besonders gut erfüllt. Daraus können Kontrollanweisungen abgeleitet werden, welche ein Rezept für diese bevorzugte Erzeugung des Ergebnisbilds bestimmt; die Kontrollanweisungen bzw. das Rezept können Objekt-spezifisch sein. In den verschiedenen Szenarien können diese Kontrollanweisungen die Kombinationsparameter umfassen, mit denen das Ergebnisbild das vorgegebene Optimierungskriterium erfüllt.

Findet die Optimierung beispielsweise, dass nicht alle ursprünglich vorgesehenen Beleuchtungsrichtungen benötig werden oder dass bestimmte Beleuchtungsrichtungen in Gruppen zusammengefasst werden können, so kann die Abbildungsaufgabe zukünftig unter Auslassung der nicht benötigten Beleuchtungsrichtungen gezielter und schneller ausgeführt werden. Dies kann in den Kontrollanweisungen hinterlegt werden.

In den verschiedenen hierin offenbarten Szenarien kann die Optimierung derart durchgeführt werden, dass die Anzahl von Beleuchtungsgeometrien bzw. Intensitätsbildern möglichst gering gewählt wird. Es ist möglich, dass die Optimierung derart durchgeführt wird, dass eine zur Bildgebung bzw. der Erfassung der Intensitätsbilder benötigte Zeitdauer möglichst klein wird. Es ist möglich, dass die Optimierung derart gewählt wird, dass die Anzahl der Beleuchtungsrichtungen und / oder Beleuchtungsraumwinkel möglichst gering gewählt wird. Z.B. können solche Eigenschaften in Bezug auf die Optimierung als Randbedingung vorgegeben werden, wobei die Optimierung selbst z.B. weiterhin in Bezug auf das vorgegebene Optimierungskriterium erfolgt. Derart kann die Bildgebungsaufgabe besonders zügig durchgeführt werden, wobei gleichzeitig das Optimierungskriterium besonders gut erfüllt wird.

Bei Routine-Aufgaben wie beispielsweise der optischen Inspektion ändern sich die Objekte typischerweise nicht wesentlich, so dass Kontrollanweisungen für eine gegebene Abbildungsaufgabe wiederholt ausgeführt werden kann. Allgemein ist es auch möglich, mehrere Kontrollanweisungen für verschiedene vorgegebene Objekte in einem Speicher zu hinterlegen, so dass ein bestimmtes Rezept für das Kombinieren der Intensitätsbilder bzw. für das Anwenden des Operators bevorzugt automatisch ausgewählt werden kann.

Im Allgemeinen ist es möglich, dass das Kombinieren vergleichsweise wenig rechenintensiv ist - insbesondere im Vergleich zum Durchführen der Optimierung bzw. dem Bestimmen der Kombinationsparameter. Deshalb kann es in nicht zur Erfindung gehörenden Varianten möglich sein, die Kombinationsparameter bereits im Vorfeld des Bilderfassungsschritts - z.B. im Rahmen eines Kalibrationsschritts zu - bestimmen.

Es wäre auch möglich, dass die Kombinationsparameter nach dem Bilderfassungsschritt, z.B. im Rahmen eines Nachbearbeitungsschritts, bestimmt werden. Z.B. könnten dazu die Bilddaten, die auf den erfassten Intensitätsbildern 401-1 - 401-3 basieren, und zugehörige Steuerdaten, die die jeweilige Beleuchtungsgeometrie 110-1, 110-2 indizieren, in einem nicht-flüchtigen Speicher abgespeichert werden. Wenn der Nachbearbeitungsschritt durchgeführt werden soll, kann es möglich sein, die verschiedenen Bilddaten und die zugehörigen Steuerdaten aus dem nicht-flüchtigen Speicher zu erhalten. Dann kann das Kombinieren anhand der abgespeicherten Bilddaten und Steuerdaten erfolgen. Insbesondere kann auch das Durchführen der Optimierung zum Bestimmen der Kombinationsparameter anhand der abgespeicherten Bilddaten und Steuerdaten erfolgen.

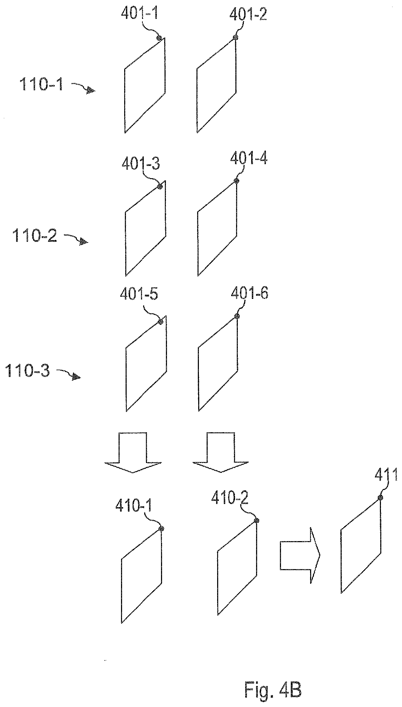

In FIG. 4B ist ein Szenario dargestellt, bei dem das Kombinieren der verschiedenen Intensitätsbilder 401-1 - 401-6 Wellenlängen-abhängig erfolgt. In dem Szenario der FIG. 4B werden für die drei Beleuchtungsgeometrien 110-1 - 110-3 jeweils zwei Intensitätsbilder 401-1 - 401-6 erfasst. Dabei wird jeweils ein erstes der Intensitätsbilder 401-1, 401-3, 401-5 beim Beleuchten des Objekts 100 mit einer ersten Wellenlänge erfasst; ein zweites der Intensitätsbild 401-2, 401-4, 401-6 wird jeweils während des Beleuchtens des Objekts 100 mit einer zweiten Wellenlänge, die verschieden von der ersten Wellenlänge ist, erfasst. Für jede der verschiedenen Beleuchtungsgeometrien 110-1 - 110-3 werden dann jeweils die Intensitätsbilder 401-1, 401-3, 401-5, die der ersten Wellenlänge zugeordnet sind, bzw. die Intensitätsbilder 401-2, 401-4, 401-6, die der zweiten Wellenlänge zugeordnet sind, zu einem Ergebnisbild 410-1, 410-2 kombiniert. In anderen Worten wird das sequentielle Beleuchten mit mindestens zwei Beleuchtungsgeometrien 110-1 - 110-3 für verschiedene Wellenlängen durchgeführt und das Kombinieren der entsprechenden Intensitätsbilder 401-1 - 401-6 jeweils zum Erzeugen eines zugehörigen Ergebnisbilds 410-1, 410-2 für die verschiedenen Wellenlängen durchgeführt. Es wäre optional möglich, die beiden Ergebnisbilder 410-1, 410-2 zu einem polychromatischen Ergebnisbild 411 zu kombinieren.

Es wäre alternativ oder zusätzlich auch möglich, alle Intensitätsbilder 401-1 - 401-6 der verschiedenen Wellenlängen zu einem einzigen Ergebnisbild 410 zu kombinieren und dabei die verschiedenen Wellenlängen als weiteren Parameter im Parameterraum der Optimierung bezüglich des Optimierungskriteriums zu verwenden.

In Bezug auf FIG. 4B wurde ein Szenario illustriert, bei dem das Beleuchten des Objekts 100 mit verschiedenen Wellenlängen sequentiell durchgeführt wird. Es wäre aber alternativ auch möglich, eine polychromatische Lichtquelle zu verwenden und einen Wellenlängen-selektiven Detektor zum Erzeugen der verschiedenen Ergebnisbilder 401-1 - 401-6 einzusetzen.

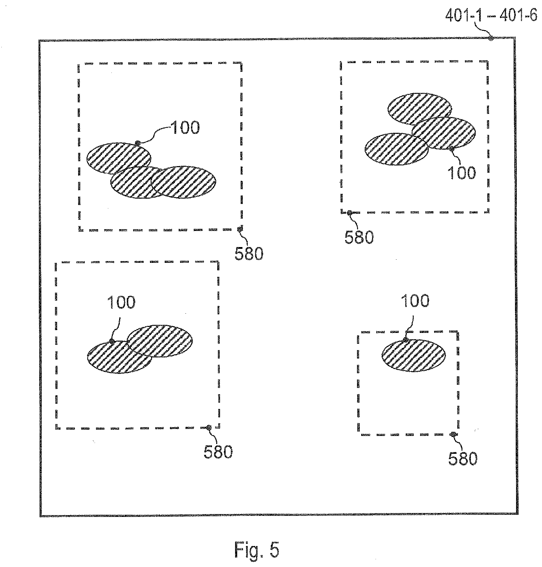

Z.B. kann die Optimierung ortsaufgelöst für die verschiedenen Bereiche 580 durchgeführt werden. Dann können die Kombinationsparameter jeweils für die verschiedenen Bereiche 580 bereitgestellt werden und das Kombinieren kann ortsaufgelöst für die verschiedenen Bereiche 580 basierend auf den entsprechenden Kombinationsparametern erfolgen. Das Kombinieren kann also ortsaufgelöst für verschiedene Bereiche 580 der Intensitätsbilder 401-1 - 401-6 erfolgen, wie in FIG. 5 dargestellt. Dadurch kann erreicht werden, dass die verschiedenen Bereiche 580 des Ergebnisbilds 410, 410-1, 410-2, 411 jeweils das Optimierungskriterium erfüllen. Z.B. können unterschiedliche Teile des Objekts 100 unterschiedliche optische Eigenschaften aufweisen. Derart kann es beim integralen Bestimmen der Kombinationsparameter gleichförmig für die gesamten Intensitätsbilder 401-1 - 401-6 nicht oder nur eingeschränkt möglich sein, ein vergleichsweise striktes Optimierungskriterium gleichermaßen gut für alle Bereiche 580 zu erfüllen. Deshalb kann es durch das ortsaufgelöste Kombinieren möglich sein, für die verschiedenen Bereiche 580 ein vergleichsweise striktes Optimierungskriterium besonders gut zu erfüllen, wobei aber lokal unterschiedliche Kombinationsparameter berücksichtigt werden.

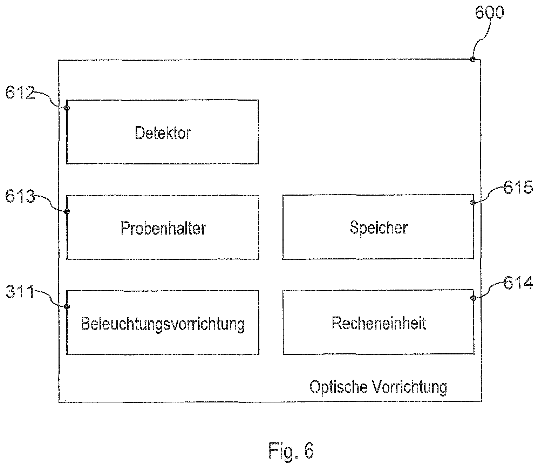

In FIG. 6 ist eine optische Vorrichtung 600 dargestellt, mit der sich die voranstehend beschriebenen Techniken implementieren lassen. Die optische Vorrichtung 600 umfasst eine Beleuchtungsvorrichtung 311, z.B. in Form des LED-Arrays (vgl. FIG. 3). Das Objekt 100 wird durch einen Probenhalter 613 in einem optischen Pfad des Lichts von der Beleuchtungsvorrichtung 311 zu dem Detektor 612 gehalten. Z.B. kann eine Transmissionsgeometrie oder eine Reflektionsgeometrie implementiert werden. Ferner weist die optische Vorrichtung 600 eine Recheneinheit 614 auf. Die Recheneinheit 614 ist eingerichtet, um die verschiedenen Schritte zum Erzeugen des Ergebnisbilds 410, 410-1, 410-2, 411 (vgl. FIG. 4A und 4B) durchzuführen. Die optische Vorrichtung 600 weist weiterhin einen nicht-flüchtigen Speicher 615 auf. Der Speicher 615 kann entsprechenden Steuerinformationen für die Recheneinheit 614 umfassen, damit diese die verschiedenen Techniken zum Erzeugen des Ergebnisbilds 410, 410-1, 410-2, 411 wie oben stehend beschrieben, ausführen kann. Der Speicher 615 kann alternativ oder zusätzlich auch Bilddaten der Intensitätsbilder 401-1 - 401-6 und zugehörige Steuerdaten, die die jeweilige Beleuchtungsgeometrie 110-1 - 110-3 indizieren, abspeichern. Dann kann es möglich sein, dass der Prozessor das Ergebnisbild 410, 410-1, 410-2, 411 durch Zugriff auf den Speicher in dem Nachbearbeitungsschritt erzeugt. Der Speicher 615 kann auch die Kontrollanweisungen und / oder die Kombinationsparameter abspeichern, die dazu verwendet werden, um bestimmte Abbildungsaufgaben wiederholt durchzuführen, sodass das Optimierungskriterium erfüllt ist.

In dem Szenario der FIG. 6 ist die Recheneinheit 614 in die optische Vorrichtung integriert. In anderen Szenarien kann die Recheneinheit 614 und z.B. der Speicher 615 auch separat vorgesehen sein. Z.B. bei veränderlichen Objekten kann es jedoch erstrebenswert sein, die Optimierung jedes Mal erneut durchzuführen; insoweit kann es vorteilhaft sein, die Recheneinheit 614, der eingerichtet ist, um die Optimierung durchzuführen, in die optischen Vorrichtung 600 zu integrieren.

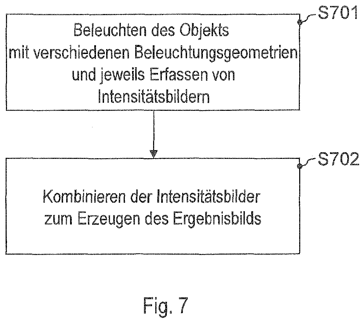

In FIG. 7 ist ein Flussdiagramm eines Verfahrens zum Erzeugen des Ergebnisbilds 410, 410-1, 410-2, 411 gemäß verschiedener Ausführungsformen dargestellt. Zunächst wird in Schritt S701 das Objekt 100 sequentiell mit den verschiedenen Beleuchtungsgeometrien 110-1 - 110-3 beleuchtet und jeweils ein Intensitätsbild 401-1 - 401-6 erfasst. Schritt S701 entspricht dem Bilderfassungsschritt.

Dann erfolgt in Schritt S702 das Kombinieren der erfassten Intensitätsbilder 401-1 - 401-6 zum Erzeugen des Ergebnisbilds 410, 410-1, 410-2, 411, sodass dieses das Optimierungskriterium erfüllt. Im Rahmen von Schritt S702 kann auch ein Operator auf die Intensitätsbilder angewendet werden, um diese vor dem Kombinieren zu bearbeiten.

Schritt S702 kann in verschiedenen Ausführungsformen in Echtzeit in Bezug auf Schritt S701 durchgeführt werden. Dann kann es möglich sein, das Ergebnisbild 410, 410-1, 410-2, 411 auf einem Bildschirm in Echtzeit darzustellen. Es kann aber auch möglich sein, dass Schritt S702 in einem zeitlich gegenüber dem Bilderfassungsschritt beabstandeten Nachbearbeitungsschritt durchgeführt wird. Dies kann insbesondere dann erstrebenswert sein, wenn im Rahmen des Schritts S702 eine Optimierung betreffend das Optimierungskriterium mittels der Recheneinheit 614 durchgeführt wird, wobei die Optimierung Kombinationsparameter für das Kombinieren bereitstellt. Ein solches Durchführen der Optimierung kann nämlich vergleichsweise rechenintensiv sein und dadurch nicht oder nur eingeschränkt in Echtzeit in Bezug auf den Bilderfassungsschritt S701 durchgeführt werden.

Voranstehend wurden also Techniken erläutert, mit denen ein Ergebnisbild basierend auf mehreren Intensitätsbildern, die für verschiedene Beleuchtungsgeometrien erfasst werden, bestimmt werden kann. Insbesondere kann das Ergebnisbild Bildeigenschaften aufweisen, die vergleichbar sind mit Bildeigenschaft, die mittels der herkömmlichen Hardware-implementierten strukturierten Beleuchtung erreicht werden können. Dabei weisen die voranstehend beschriebenen Techniken verschiedene Vorteile gegenüber der herkömmlichen strukturierten Beleuchtung auf: so können beliebig strukturierte Beleuchtungspupillen verwendet werden - insbesondere müssen nicht verschiedenste Strukturfilter und eine entsprechende Maskenwechsel-Einheit vorgehalten werden; verschiedene Beleuchtungspupillen können für verschiedene Teile eines Bildes realisiert werden - in anderen Worten kann das Kombinieren der erfassten Intensitätsbilder ortsaufgelöst stattfinden; die voranstehenden Techniken können Computer-implementiert durchgeführt werden und mit Hardware-implementierter Vorkonditionierung der verschiedenen erfassten Intensitätsbilder kombiniert werden; eine Offline-Nachbearbeitung ist möglich - insbesondere kann es möglich sein, die verschiedenen Kombinationsparameter nachträglich zu optimieren, sodass das Ergebnisbild eine besonders hohe Qualität aufweist.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

## Patentansprüche

1. Verfahren zum Erzeugen eines Ergebnisbilds (410, 410-1, 410-2, 411) eines Objekts (100) mittels einer optischen Vorrichtung (600), wobei die optische Vorrichtung ein Mikroskop ist,
   wobei das Verfahren die folgenden Schritte umfasst:

   - sequentielles Beleuchten des Objekts (100) mit mindestens zwei Beleuchtungsgeometrien (110-1, 110-2, 110-3) mittels einer Beleuchtungsvorrichtung (311) der optischen Vorrichtung (600),
   - für jede der mindestens zwei Beleuchtungsgeometrien (110-1, 110-2, 110-3): während des Beleuchtens mit der jeweiligen Beleuchtungsgeometrie (110-1, 110-2, 110-3), Erfassen eines Intensitätsbilds (401-1 - 401-6) des Objekts (100) mittels eines Detektors (612) der optischen Vorrichtung (600),
   - gewichtetes Kombinieren der Intensitätsbilder (401-1 - 401-6) auf Grundlage von Kombinationsparametern zum Erzeugen des Ergebnisbilds (410, 410-1, 410-2, 411) mittels einer Recheneinheit (614),

   wobei das Kombinieren derart erfolgt, dass das Ergebnisbild (410, 410-1, 410-2, 411) ein vorgegebenes Optimierungskriterium erfüllt,
   wobei das Verfahren weiterhin umfasst:

   - Durchführen einer numerischen Optimierung mittels der Recheneinheit (614), wobei das Durchführen der numerischen Optimierung die Kombinationsparameter für das gewichtete Kombinieren bereitstellt, mit denen das Ergebnisbild (410, 410-1, 410-2, 411) das vorgegebene Optimierungskriterium erfüllt.

2. Verfahren nach Anspruch 1,
   wobei das Kombinieren ortsaufgelöst für verschiedene Bereiche (580) der Intensitätsbilder (401-1 - 401-6) erfolgt, sodass die verschiedenen Bereiche (580) des Ergebnisbilds (410, 410-1, 410-2, 411) das Optimierungskriterium erfüllen.

3. Verfahren nach Anspruch 1 oder 2,
   wobei das sequentielle Beleuchten mit den mindestens zwei Beleuchtungsgeometrien (110-1, 110-2, 110-3) und / oder das Erfassen der entsprechenden Intensitätsbilder (401-1 - 401-6) mehrfach für verschiedenen Wellenlängen durchgeführt wird,
   wobei das Kombinieren der entsprechenden Intensitätsbilder (401-1 - 401-6) jeweils zum Erzeugen eines zugehörigen Ergebnisbilds (410, 410-1, 410-2, 411) für die verschiedenen Wellenlängen durchgeführt wird.

4. Verfahren nach Anspruch 1,
   wobei das Durchführen der Optimierung ortsaufgelöst für verschieden Bereiche (580) der Intensitätsbilder (401-1 - 401-6) erfolgt,
   wobei die Kombinationsparameter jeweils für die verschiedenen Bereiche (580) bereitgestellt werden und
   wobei das Kombinieren ortsaufgelöst für die verschiedenen Bereiche (580) der Intensitätsbilder (401-1 - 401-6) basierend auf den entsprechenden Kombinationsparametern erfolgt.

5. Verfahren nach Anspruch 3 oder 4,
   wobei das Durchführen der Optimierung mindestens eine Randbedingung berücksichtigt, die aus folgender Gruppe ausgewählt ist: eine Anzahl von erfassten Intensitätsbildern (401-1 - 401-6); eine Anzahl von Beleuchtungsgeometrien (110-1, 110-2, 110-3); eine Anzahl von Beleuchtungsrichtungen (111-1, 111-2); eine Anzahl von Beleuchtungsraumwinkeln (112); eine Zeitdauer für das Erfassen der Intensitätsbilder (401-1 - 401-6).

6. Verfahren nach einem der voranstehenden Ansprüche,
   wobei das vorgegebene Optimierungskriterium aus folgender Gruppe ausgewählt ist: ein Bildkontrast; eine Kantensteilheit; eine Bildschärfe; eine Güte einer Modulationsübertragungsfunktion; ein Ortsfrequenz-abhängiges Optimierungskriterium.

7. Verfahren nach einem der voranstehenden Ansprüche,
   wobei das Verfahren weiterhin umfasst:

   - vor dem Kombinieren der Intensitätsbilder (401-1 - 401-6): mittels der Recheneinheit (614) Anwenden eines Operators auf die erfassten Intensitätsbilder (401-1 - 401-6) zum Anpassen der Intensitätsbilder (401-1 - 401-6).

8. Verfahren nach Anspruch 7,
   wobei der Operator aus folgender Gruppe ausgewählt ist: Wichtung; Verstärkung; Dämpfung; Betrag; Quadrat; Wurzel; Vorzeichenumkehr; Glättung von Bildpunkten; Aberrationskorrektur von Bildpunkten; Normierung auf einen Mittelwert von Bildpunktwerten des jeweiligen Intensitätsbilds (401-1 - 401-6); Anwendung eines Raumfilters; morphologischer Operator; normierter lokaler Kontrast; normierte lokale Intensität; normierter Intensitätsgradient; Dilatation; Erosion; Kantenfilter; Rauschfilter.

9. Verfahren nach Anspruch 7 oder 8,
   wobei der Operator ein Schwellenwert-Operator ist.

10. Verfahren nach einem der Ansprüche 7-9,
    wobei ein ausgewählter Operator, der ein ausgewähltes Intensitätsbild (401-1 - 401-6) anpasst, eine Abhängigkeit von mindestens einem weiteren Intensitätsbild (401-1 - 401-6) aufweist.

11. Verfahren nach Anspruch 8,
    wobei die mindestens zwei Beleuchtungsgeometrien (110-1, 110-2, 110-3) verschiedene Beleuchtungsrichtungen (111-1, 111-2) umfassen,
    wobei der Raumfilter für jede Beleuchtungsrichtung Strukturen des Objekts (100), die in einer durch die Beleuchtungsrichtung und eine optische Achse der optischen Vorrichtung (600) festgelegten Ebene angeordnet sind, gegenüber Strukturen, die senkrecht zu dieser Ebene angeordnet sind, dämpft.

12. Verfahren nach einem der voranstehenden Ansprüche,
wobei das Verfahren weiterhin umfasst:

- Abspeichern von Bilddaten, die auf den erfassten Intensitätsbilder (401-1 - 401-6) basieren, und von zugehörigen Steuerdaten, die die jeweilige Beleuchtungsgeometrie (110-1, 110-2, 110-3) indizieren, in einem nicht-flüchtigen Speicher,

wobei das Kombinieren in einem Nachbearbeitungsschritt nach einem Bilderfassungsschritt, der das Beleuchten des Objekts (100) und das Erfassen der Intensitätsbilder (401-1 - 401-6) umfasst, anhand der abgespeicherten Bilddaten und Steuerdaten erfolgt.

13. Optische Vorrichtung (600), die eingerichtet ist, um ein Ergebnisbild (410, 410-1, 410-2, 411) eines Objekts (100) zu erzeugen, wobei die optische Vorrichtung ein Mikroskop ist, wobei die optische Vorrichtung (600) umfasst:

- eine Beleuchtungsvorrichtung (311), die eingerichtet ist, um das Objekt (100) sequentiell mit mindestens zwei Beleuchtungsgeometrien (110-1, 110-2, 110-3) zu beleuchten,
- einen Detektor (612), der eingerichtet ist, um für jede der mindestens zwei Beleuchtungsgeometrien (110-1, 110-2, 110-3) während des Beleuchtens mit der jeweiligen Beleuchtungsgeometrie (110-1, 110-2, 110-3) ein Intensitätsbild (401-1 - 401-6) des Objekts (100) zu erfassen,
- eine Recheneinheit (614), die eingerichtet ist, um die Intensitätsbilder (401-1 - 401-6) zum Erzeugen des Ergebnisbilds (410, 410-1, 410-2, 411) zu auf Grundlage von Kombinationsparametern gewichtet kombinieren,

wobei das Kombinieren derart erfolgt, dass das Ergebnisbild (410, 410-1, 410-2, 411) ein vorgegebenes Optimierungskriterium erfüllt,
wobei die Recheneinheit weiterhin eingerichtet ist, um:

- eine numerische Optimierung durchzuführen, wobei das Durchführen der numerischen Optimierung die Kombinationsparameter für das gewichtete Kombinieren bereitstellt, mit denen das Ergebnisbild (410, 410-1, 410-2, 411) das vorgegebene Optimierungskriterium erfüllt.

## Claims

1. Method for producing a results image (410, 410-1, 410-2, 411) of an object (100) by means of an optical apparatus (600), wherein the optical apparatus is a microscope,
wherein the method comprises the following steps:

- sequentially illuminating the object (100) using at least two illumination geometries (110-1, 110-2, 110-3) by means of an illumination apparatus (311) of the optical apparatus (600),
- for each of the at least two illumination geometries (110-1, 110-2, 110-3): capturing an intensity image (401-1 - 401-6) of the object (100) by means of a detector (612) of the optical apparatus (600) during the illumination with the respective illumination geometry (110-1, 110-2, 110-3),
- combining the intensity images (401-1 - 401-6) in a weighted fashion on the basis of combination parameters for producing the results image (410, 410-1, 410-2, 411) by means of a computing unit (614),

wherein the combining is carried out in such a way that the results image (410, 410-1, 410-2, 411) satisfies a prescribed optimization criterion,
wherein the method furthermore comprises:

- performing a numerical optimization by means of the computing unit (614), wherein the performance of the numerical optimization provides the combination parameters for the combining in a weighted fashion with which the results image (410, 410-1, 410-2, 411) satisfies the prescribed optimization criterion.

2. Method according to Claim 1,
wherein the combining is carried out with a spatial resolution for different regions (580) of the intensity images (401-1 - 401-6) such that the different regions (580) of the results image (410, 410-1, 410-2, 411) satisfy the optimization criterion.

3. Method according to Claim 1 or 2,
   wherein the sequential illumination using the at least two illumination geometries (110-1, 110-2, 110-3) and/or the capture of the corresponding intensity images (401-1 - 401-6) is carried out a number of times for different wavelengths,
   wherein the combining of the corresponding intensity images (401-1 - 401-6) is carried out in each case for producing an associated results image (410, 410-1, 410-2, 411) for the different wavelengths.

4. Method according to Claim 1,
   wherein the optimization is performed with a spatial resolution for different regions (580) of the intensity images (401-1 - 401-6),
   wherein the combination parameters are respectively provided for the different regions (580) and
   wherein the combining is carried out with a spatial resolution for the different regions (580) of the intensity images (401-1 - 401-6) on the basis of the corresponding combination parameters.

5. Method according to Claim 3 or 4,
   wherein the performance of the optimization considers at least one boundary condition selected from the following group: a number of captured intensity images (401-1 - 401-6); a number of illumination geometries (110-1, 110-2, 110-3); a number of illumination directions (111-1, 111-2); a number of illumination solid angles (112); a time interval for capturing the intensity images (401-1 - 401-6).

6. Method according to one of the preceding claims,
   wherein the prescribed optimization criterion is selected from the following group: an image contrast; an edge steepness; an image sharpness; a quality of a modulation transfer function; a spatial-frequency-dependent optimization criterion.

7. Method according to one of the preceding claims,
   wherein the method furthermore comprises:

   - before combining the intensity images (401-1 - 401-6) : applying an operator to the captured intensity images (401-1 - 401-6) by means of the computing unit (614) for the purposes of adapting the intensity images (401-1 - 401-6).

8. Method according to Claim 7,
   wherein the operator is selected from the following group: weighting; amplification; damping; absolute value; squaring; taking a root; reversing the sign; smoothing pixels; aberration correction of pixels; normalizing to a mean value of pixel values of the respective intensity image (401-1 - 401-6); applying a spatial filter; morphological operator; normalized local contrast; normalized local intensity; normalized intensity gradient; dilatation; erosion; edge filter; noise filter.

9. Method according to Claim 7 or 8,
   wherein the operator is a threshold operator.

10. Method according to one of Claims 7-9,
    wherein a selected operator which adapts a selected intensity image (401-1 - 401-6) exhibits a dependence on at least one further intensity image (401-1 - 401-6).

11. Method according to Claim 8,
    wherein the at least two illumination geometries (110-1, 110-2, 110-3) comprise different illumination directions (111-1, 111-2),
    wherein, for each illumination direction, the spatial filter damps structures of the object (100) which are arranged in a plane defined by the illumination direction and an optical axis of the optical apparatus (600) in relation to structures arranged perpendicular to this plane.

12. Method according to one of the preceding claims,
    wherein the method furthermore comprises:

**EP 3 195 250 B1**

- storing image data based on the captured intensity images (401-1 - 401-6) and associated control data which indicate the respective illumination geometry (110-1, 110-2, 110-3), in a non-volatile memory,

wherein the combining is carried out on the basis of the stored image data and control data in a post-processing step after an image-capturing step, which comprises illuminating the object (100) and capturing the intensity images (401-1 - 401-6).

13. Optical apparatus (600), configured to produce a results image (410, 410-1, 410-2, 411) of an object (100), wherein the optical apparatus is a microscope, wherein the optical apparatus (600) comprises:

- an illumination apparatus (311) configured to illuminate the object (100) sequentially using at least two illumination geometries (110-1, 110-2, 110-3),
- a detector (612) configured to capture an intensity image (401-1 - 401-6) of the object (100) for each of the at least two illumination geometries (110-1, 110-2, 110-3) during the illumination with the respective illumination geometry (110-1, 110-2, 110-3),
- a computing unit (614) configured to combine the intensity images (401-1 - 401-6) in a weighted fashion on the basis of combination parameters for producing the results image (410, 410-1, 410-2, 411),

wherein the combining is carried out in such a way that the results image (410, 410-1, 410-2, 411) satisfies a prescribed optimization criterion,
wherein the computing unit is furthermore configured to:

- perform a numerical optimization, wherein the performance of the numerical optimization provides the combination parameters for the combining in a weighted fashion with which the results image (410, 410-1, 410-2, 411) satisfies the prescribed optimization criterion.


**Revendications**

1. Procédé de génération d'une image résultante (410, 410-1, 410-2, 411) d'un objet (100) au moyen d'un dispositif optique (600), le dispositif optique étant un microscope,
le procédé comprenant les étapes suivantes :

- effectuer un éclairage séquentiel de l'objet (100) avec au moins deux géométries d'éclairage (110-1, 110-2, 110-3) au moyen d'un dispositif d'éclairage (311) du dispositif optique (600),
- pour chacune des au moins deux géométries d'éclairage (110-1, 110-2, 110-3) : pendant l'éclairage avec la géométrie d'éclairage respective (110-1, 110-2, 110-3), effectuer une capture d'une image d'intensité (401-1 - 401-6) de l'objet (100) au moyen d'un détecteur (612) du dispositif optique (600),
- effectuer une combinaison pondérée des images d'intensité (401-1 - 401-6) sur la base de paramètres de combinaison pour générer l'image résultante (410, 410-1, 410-2,411) au moyen d'une unité de calcul (614),

la combinaison étant effectuée de telle manière que l'image résultante (410, 410-1, 410-2, 411) satisfasse à un critère d'optimisation prédéfini,
le procédé comprenant en outre l'étape suivante :

- effectuer une optimisation numérique au moyen de l'unité de calcul (614), l'optimisation numérique effectuée produisant les paramètres de combinaison qui sont destinés à la combinaison pondérée et avec lesquels l'image résultante (410, 410-1, 410-2, 411) satisfait au critère d'optimisation spécifié.

2. Procédé selon la revendication 1,
la combinaison étant effectuée avec une résolution spatiale pour différentes zones (580) des images d'intensité (401-1 - 401-6) de sorte que les différentes zones (580) de l'image résultante (410, 410-1, 410-2, 411) satisfassent au critère d'optimisation.

3. Procédé selon la revendication 1 ou 2.
l'éclairage séquentiel avec les au moins deux géométries d'éclairage (110-1, 110-2, 110-3) et/ou la capture des images d'intensité correspondantes (401-1 - 401-6) étant effectués plusieurs fois pour des longueurs d'onde différentes,

la combinaison des images d'intensité correspondantes (401-1-401-6) étant effectuée à chaque fois pour générer une image résultante associée (410, 410-1, 410-2, 411) pour les différentes longueurs d'onde.

4. Procédé selon la revendication 1,
l'optimisation étant effectuée avec une résolution spatiale pour différentes zones (580) des images d'intensité (401-1 - 401-6),
les paramètres de combinaison étant chacun produits pour les différentes zones (580) et
la combinaison étant effectuée avec une résolution spatiale pour les différentes zones (580) des images d'intensité (401-1 - 401-6) sur la base des paramètres de combinaison correspondants.

5. Procédé selon la revendication 3 ou 4,
l'optimisation étant effectuée avec prise en compte d'au moins une condition aux limites choisie dans le groupe suivant : un certain nombre d'images d'intensité capturées (401-1 - 401-6) ; un certain nombre de géométries d'éclairage (110-1, 110-2, 110-3) ; un certain nombre de directions d'éclairage (111-1, 111-2) ; un certain nombre d'angles d'éclairage solides (112) ; un intervalle de temps pour capturer les images d'intensité (401-1 - 401-6).

6. Procédé selon l'une des revendications précédentes,
le critère d'optimisation spécifié étant sélectionné dans le groupe suivant : un contraste d'image ; une pente de bord ; une netteté d'image ; une qualité d'une fonction de transmission par modulation ; un critère d'optimisation dépendant de la fréquence spatiale.

7. Procédé selon l'une des revendications précédentes,
le procédé comprenant en outre :

- avant d'effectuer la combinaison des images d'intensité (401-1 - 401-6) : appliquer au moyen de l'unité de calcul (614) un opérateur aux images d'intensité capturées (401-1 - 401-6) pour adapter les images d'intensité (401-1 - 401-6).

8. Procédé selon la revendication 7,
l'opérateur étant choisi dans le groupe suivant : pondération ; amplification ; atténuation ; valeur absolue ; élévation au carré ; extraction de racine ; inversion de signe ; lissage de pixels ; correction d'aberration des pixels ; normalisation à une valeur moyenne de valeurs de pixel de l'image d'intensité respective (401-1 - 401-6) ; application d'un filtre d'ambiance ; opérateur morphologique ; contraste local normalisé ; intensité locale normalisée ; gradient d'intensité normalisé ; dilatation ; érosion ; filtre de bord ; filtre de bruit.

9. Procédé selon la revendication 7 ou 8,
l'opérateur étant un opérateur de valeur de seuil.

10. Procédé selon l'une des revendications 7 à 9,
un opérateur sélectionné, qui adapte une image d'intensité sélectionnée (401-1 - 401-6), présentant une dépendance d'au moins une autre image d'intensité (401-1 - 401-6).

11. Procédé selon la revendication 8,
les au moins deux géométries d'éclairage (110-1, 110-2, 110-3) comprenant différentes directions d'éclairage (111-1, 111-2),
le filtre spatial pour chaque direction d'éclairage atténuant des structures de l'objet (100) qui sont disposées dans un plan, défini par la direction d'éclairage et un axe optique du dispositif optique (600), par rapport aux structures qui sont disposées perpendiculairement à ce plan.

12. Procédé selon l'une des revendications précédentes,
le procédé comprenant en outre l'étape suivante :

- mémoriser des données d'image qui sont basées sur les images d'intensité capturées (401-1 - 401-6) et des données de commande associées qui indexent la géométrie d'éclairage respective (110-1, 110-2, 110-3) dans une mémoire non volatile,

la combinaison étant effectuée dans une étape de post-traitement après une étape de capture d'image, qui comprend l'éclairage de l'objet (100) et la capture des images d'intensité (401-1 - 401-6), sur la base des données d'image et des données de commande mémorisées.

13. Dispositif optique (600) qui est conçu pour générer une image résultante (410, 410-1, 410-2, 411) d'un objet (100), le dispositif optique étant un microscope, le dispositif optique (600) comprenant :

- un dispositif d'éclairage (311) qui est conçu pour éclairer l'objet (100) séquentiellement avec au moins deux géométries d'éclairage (110-1, 110-2, 110-3),
- un détecteur (612) qui est adapté pour détecter une image d'intensité (401-1 - 401-6) de l'objet (100) pour chacune des au moins deux géométries d'éclairage (110-1, 110-2, 110-3) pendant l'éclairage avec la géométrie d'éclairage respective (110-1, 110-2, 110-3),
- une unité de calcul (614) qui est adaptée pour combiner les images d'intensité (401-1 - 401-6) de manière pondérée sur la base de paramètres de combinaison afin de générer l'image résultante (410, 410-1, 410-2, 411),

la combinaison étant effectuée de telle sorte que l'image résultante (410, 410-1, 410-2, 411) satisfasse à un critère d'optimisation spécifié, l'unité de calcul étant en outre conçue pour :

- effectuer une optimisation numérique, l'optimisation numérique effectuée produisant les paramètres de combinaison pour la combinaison pondérée avec lesquels l'image résultante (410, 410-1, 410-2, 411) satisfait au critère d'optimisation spécifié.

Fig. 1

Fig. 2

Fig. 3

401-1

402-1

110-1

401-2

402-2

110-2

401-3

402-3

110-3

410

Fig. 4A

401-1    401-2

110-1

401-3    401-4

110-2

401-5    401-6

110-3

410-1    410-2    411

Fig. 4B

Fig. 5

Fig. 6

S701

Beleuchten des Objekts
mit verschiedenen Beleuchtungsgeometrien
und jeweils Erfassen von
Intensitätsbildern

S702

Kombinieren der Intensitätsbilder
zum Erzeugen des Ergebnisbilds

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040184667 A1
- US 2014002722 A1

- DE 102014101219

**In der Beschreibung aufgeführte Nicht-Patentliteratur**

- **H. GROSS et al.** Handbook of Optical Systems. Wiley-VCH, 2005, vol. 2

- **H. SIEDENTOPF.** Die Sichtbarmachung von Kanten im mikroskopischen Bilde. *Zeitschr. f. wiss. Mikroskopie,* 1908, vol. XXV